# EUROPEAN PATENT APPLICATION

(11) **EP 1 686 710 A1**
(43) Date of publication of application: **02.08.2006**
(21) Application number: 05290218.6
(22) Date of filing: 31.01.2005
(51) Int. Cl.: H04B 10/17, H01S 3/13

(54) **Fiber optical system with raman tilt control**

(71) Applicant: ALCATEL, 75008 Paris (FR)
(72) Inventor: Charlet, Gabriel, 91190 Villiers-Le-Bacle (FR); Simonneau, Christian, 92160 Antony (FR)
(74) Representative: Kohler Schmid Möbus

(57) **Abstract**

A fiber optical system (1) for transmitting an optical signal comprises an optical fiber line (2) with a plurality of optical fiber spans (3) interconnected by a plurality of optical amplifiers (4). Each optical amplifier (4) comprises: At least one variable optical attenuator (5) generating a gain tilt of the amplification of the optical signal, a Raman tilt determining device (6) for determining a Raman tilt induced in the fiber span (3) following the optical amplifier (4), and a dynamic controller (7) connected to the variable optical attenuator (5) and to the Raman tilt determining device (6) adjusting the gain tilt such that the Raman tilt is compensated for.

## Description

### Background of the invention

The invention relates to a fiber optical system for transmitting an optical signal, comprising an optical fiber line with a plurality of optical fiber spans interconnected by a plurality of optical amplifiers.

Stimulated Raman scattering (SRS) is one of the dominant fiber non-linear effects. SRS causes a transfer of energy from photons with high optical power to photons with low optical power. In dense wavelength division multiplexed (DWDM) systems SRS is responsible for a transfer of power from lower wavelength channels to higher wavelength channels, causing a Raman tilt in the per channel power so that lower wavelength channels have smaller per channel power than higher wavelength channels.

In fiber optical systems, in particular ultra long haul (ULH) optical systems with multiple reconfigurable optical add/drop multiplexing (ROADM), the number of multiplexed frequency channels may vary, e.g. between 1 and 80. When channels are added/dropped, the total power of the optical signal changes accordingly.

The Raman induced tilt in an optical fiber is dependent on the total power of the optical signal. It is difficult to maintain a flat, i.e. approximately constant, gain for all the spectrum of the amplified wavelength band when the number of channels is changed (especially when a fiber is cut and the number of channels decreases very quickly). For ultra long haul systems with a large number of amplifiers Raman tilt cumulated over the whole system is a challenging problem. If an optical system with 25 fiber spans (commonly deployed system) is considered, a Raman tilt of 1 dB per fiber span leads to a tilt of 25 dB at the end of the transmission line (if spectral hole burning effects are neglected), which is completely unacceptable.

In US 2004/0252366 A1, an optical amplifier having fast Raman tilt control is described. A gain tilt of the amplifier is controlled based on an optical signal entering the optical amplifier and in particular, on a "feed-forward", predictive methodology that monitors optical signals entering the optical amplifier.

### Object of the invention

It is the object of the invention to provide a fiber optical system of the above-mentioned kind maintaining an approximately constant gain over the amplified wavelength band, in particular when the number of channels of the optical signal is varied.

### Short description of the invention

This object is achieved by a fiber optical system wherein each optical amplifier comprises a variable optical attenuator generating a gain tilt of the amplification of the optical signal, a Raman tilt determining device for determining a Raman tilt induced in the fiber span following the optical amplifier, and a dynamic controller connected to the variable optical attenuator and to the Raman tilt determining device adjusting the gain tilt such that the Raman tilt is compensated for.

In prior art systems, VOAs are used to generate constant per-channel power over the amplified wavelength band at the output of the amplifier. The VOA of the present invention generates a variation of the attenuation of the optical signal over the amplified wavelength band leading to a tilt of the spectrum at the output of the amplifier which compensates the Raman tilt induced in the following optical fiber span. The link between attenuation of the VOA and tilt depends on the design of the amplifier and has to be characterized for the amplifier by calibration.

The overall Raman tilt induced in the optical fiber line is compensated for each optical fiber span individually. For a Raman tilt with a positive slope over the amplified frequency band, a gain tilt with a negative slope is generated in the variable optical attenuator (VOA), such that the overall optical power at the output of each fiber span can be maintained approximately constant over the amplified wavelength band.

The dependency of the Raman tilt induced in the fiber span following the optical amplifier on the overall power of the optical signal transmitted through the fiber span may be taken into account in the Raman tilt determining device, so that a compensation for the Raman tilt is possible although the number of channels of the optical signal is varied. When the input power is reduced, the output power is reduced in the same proportion when the amplifier works in constant gain mode. As a consequence, the Raman tilt will be reduced, so that the attenuation of the VOA has to be reduced. The range of variation of the VOA for taking into account the variation of Raman tilt typically is in the range of about 1 dB to 2 dB.

In a preferred embodiment, the Raman tilt determining device comprises an output power measuring device for measuring the output power of the optical amplifier and a gain coefficient determining device for determining a Raman gain coefficient of the optical fiber span. The Raman tilt (in dB) is proportional to the product of the total power in the fiber span times the bandwidth of the amplifier (4 to 5 THz in current products) and times the Raman gain coefficient of the fiber (Cr). The Raman gain coefficient is dependent on the type of fiber (SSMF, TeraLight, TW-RS, LEAF...) and may vary by a factor of two between different fiber types such as SSMF or TW-RS. Measuring the bandwidth is not necessary as the VOA generates a tilt which is also linked with the bandwidth.

In a further preferred embodiment, each of the optical amplifiers comprises an input power measuring device connected to the dynamical controller for measuring an input power of the optical amplifier. Knowing the input power and the output power of the optical amplifier allows for a calculation of the overall gain (for all channels) of the optical amplifier. Measuring the input power and the output power is necessary for constant gain mode operation of the amplifier.

In a further preferred embodiment, each of the optical amplifiers is driven in a constant gain mode. When the input power of the amplifier is reduced (due to the loss of some channels, for example), a Gain control amplifier can be used for adjusting the pump power of the optical amplifier (e.g. EDFA). The reduction of the pump power leads to a reduced output power and consequently to a constant overall gain of the optical amplifier. Using amplfiers working with constant gain mode is advantageous since a reduction of input power when the amplifier is set to work in constant output power mode or constant current on the laser diode will lead to a tilt of the amplifier and an increase of per channel power.

In a further preferred embodiment, the optical amplifier comprises a first and a second amplification stage and the at least one variable optical attenuator is disposed in between the first and second amplification stage and/or within the first amplification stage. For the first amplification stage as well as for the second amplification stage, Erbium doped fiber amplifiers (EDFAs) may be used. The variable optical attenuator (VOA) in between the two EDFAs is normally used to generate a flat gain over the amplified wavelength band. In contrast to this, for present purposes, the VOA is adjusted to compensate for the variation of Raman tilt induced in the following fiber span. Some amplifiers use two VOAs, one inserted within the first stage and a second one in the interstage in between the first and second amplification stage. For the present invention, the first or the second VOA may be used for tilt adjustment.

In another preferred embodiment, a dispersion compensating fiber is arranged in between the first and the second amplification stage and the gain tilt is adjusted such that an additional Raman tilt induced in the dispersion compensating fiber is compensated for. The dispersion compensating fiber compensates for (linear) dispersion in the optical fiber span preceding the optical amplifier. Some additional Raman induced tilt may also be generated within the dispersion compensating fiber (DCF). This tilt may also be taken into account for the tilt calculation of the VOA in the way described above, i.e. by knowledge of the Raman coefficient of the DCF and the input power to the DCF. The kind of DCF should also e known as some DCFswill generate a larger tilt than other ones for a certain level of power, as the effective area and the length and the attenuation of the DCF have an impact of the Raman tilt within the DCF.

The invention is also realized in a method for transmitting an optical signal through a fiber optical system as described above, comprising the following steps: for each of the optical amplifiers, determining the Raman tilt induced in the fiber span following the optical amplifier and adjusting the gain tilt of the amplifier such that the Raman tilt is compensated for. Using this method, the overall performance of the optical fiber system can be optimized.

In a preferred variant, the Raman tilt is determined by measuring the output power of the optical amplifier and determining the Raman gain coefficient of the fiber span. The Raman tilt may then be calculated as described above.

In a preferred variant, an input power and an output power of the optical amplifier is measured, and the optical amplifier is driven with constant gain. Using optical amplifiers (EDFAs) with constant gain is a key element to keep the amplification per channel nearly constant. A variation of the optical input power of the optical signal entering the optical amplifier by adding/dropping channels is directly transformed into a corresponding variation of the optical output power.

In a further preferred variant, the number of channels of the optical signal is varied by reconfigurable add/drop multiplexing. The ability to add and drop wavelengths of dense wavelength division multiplexing (DWDM) fiber optical systems is a key function for saving operating and maintenance costs and improving network response time.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a detail of an embodiment of a fiber optical system according to the invention with an optical amplifier and a following fiber span,
- Fig. 2: shows a graphical representation of a generic fiber optical system with an EDFA followed by a fiber span, used for simulating the transmission of an optical signal shown in Fig.s 3 to 5,
- Fig. 3: shows a diagram representing the optical power of an optical signal as a function of wavelength at the output of the fiber span of Fig. 2, the EDFA being driven with a constant gain over the whole amplified wavelength band, having a flat spectrum at the output of the amplifier,
- Fig. 4: shows an analog diagram for the EDFA with a fixed tilted gain, and
- Fig. 5: shows an analog diagram for the EDFA with variable tilted gain.

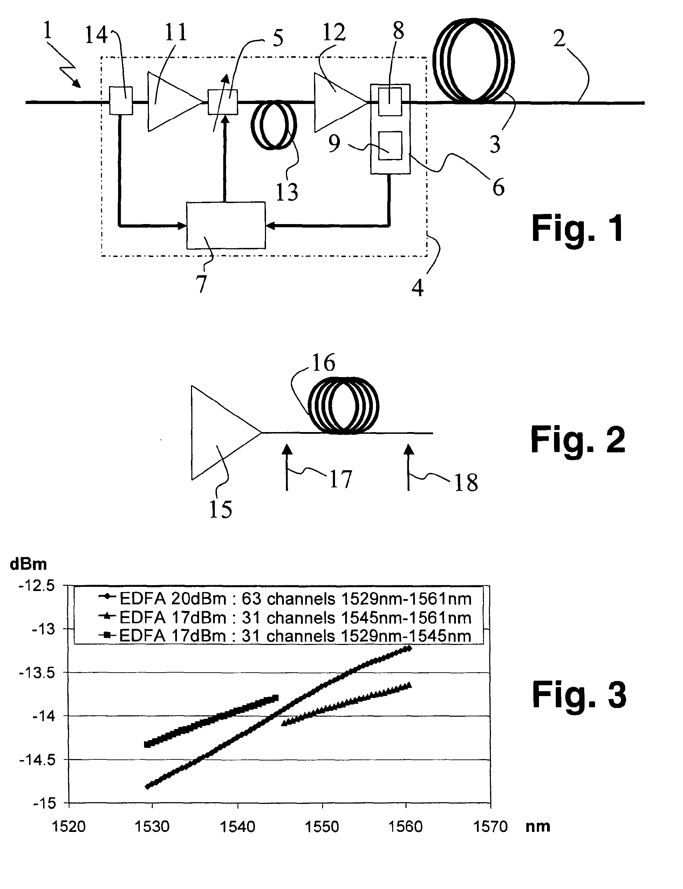

**Fig. 1** shows a detail of a fiber optical system **1** with an optical fiber line **2** through which an optical signal is transmitted. The optical fiber line 2 is divided into a plurality of optical fiber spans 3, one of which is shown in Fig. 1. The optical fiber span 3 follows an optical amplifier **4.** The whole fiber optical system 1 consists of a series of arrangements as shown in Fig. 1.

The optical amplifier **4** comprises a variable optical attenuator (VOA) **5** generating a gain tilt of the amplification of the optical signal, a Raman tilt determining device **6** for determining a Raman tilt induced in the fiber span 3 following the optical amplifier 4, and a dynamic controller 7 connected to the variable optical attenuator 5 and to the Raman tilt determining device 6. The dynamic controller 7 serves for adjusting the gain tilt of the optical amplifier 4 such that the Raman tilt induced in the following fiber span 3 is compensated for.

The Raman tilt determining device 6 comprises a photodiode as an output power measuring device **8** for measuring the output power of the optical amplifier 4 and a Raman gain coefficient determining device **9** for determining a Raman gain coefficient (Cr) of the optical fiber span 3. The Raman gain coefficient (Cr) can be determined during installation of the fiber span 3 when the kind of fiber is indicated to the amplifier 4. This may be done by a direct measurement or by a software to which the kind of optical fiber used for the subsequent fiber span is provided as an input.

For adjusting the gain tilt of the VOA 5, the Raman tilt determining device 6 calculates the Raman tilt induced in the fiber span 3 by multiplication of the output power of the optical amplifier 4 and the Raman gain coefficient Cr of the optical fiber span 3. The Raman gain coefficient is dependent on the type of fiber used for the optical fiber span 3 (e.g. SSMF, TeraLight, TW-RS, LEAF...), and may vary by a factor of two between different fiber types such as SSMF or TW-RS. The calculations carried through in the Raman tilt determining device 6 are programmed in the control software of the optical **amplifier 4.**

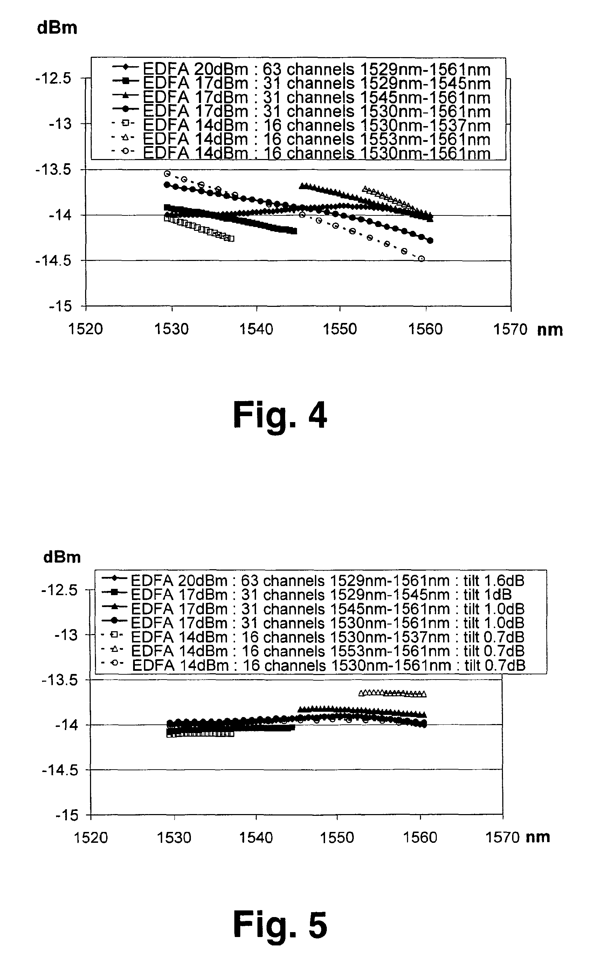

The Raman tilt is delivered as an input to the dynamic controller 7 controlling the VOA 5, so that the Raman tilt induced in the fiber span 3 can be compensated for by adjusting the VOA 5, yielding a constant gain at the output of the fiber span 3, as described below in connection with Fig. 5. The link between attenuation of the VOA and tilt depends on the design of the amplifier and has to be characterized for the amplifier (by calibration of the amplifier).

The VOA 5 is disposed in the interstage between a first and a second amplification stage **11, 12** of the optical amplifier 4, both of the stages 11, 12 consisting of an erbium doped fiber amplifier (EDFA). Alternatively, the VOA 5 may be included in the first amplification stage 11. It is also possible that an additional VOA is included in the first stage 11 of the amplifier 4.

A dispersion compensating fiber (DCF) **13** is arranged in between the first and second amplification stage 11, 12. The dispersion compensating fiber 13 generates an additional Raman tilt. The additional Raman tilt induced in the dispersion compensating fiber 13 may be compensated in the way described above, i.e. through measurement of the input power to the DCF and the Raman gain coefficient of the DCF using supplementary measuring devices such as an additional photodiode (not shown), the measurement results being provided as an input to the dynamic controller 7.

The optical amplifier **4** further comprises a photodiode as an input power measuring device **14.** The optical amplifier 4 is driven in a constant gain mode, i.e. the ratio of measured input power to measured output power is maintained constant. By keeping a constant overall gain and at the same time compensating for the induced Raman tilt, the optical power of the signal at the output of the optical fiber span 3 can be maintained approximately constant even though the number of channels of the optical signal entering the optical amplifier 4 is varied, e.g. by reconfigurable add/drop multiplexing.

For a better understanding of the advantageous effects of the use of variable tilted gain (i.e. gain tilt adjusted to the number of cannels as described above), **Fig. 2** shows a fiber optical system comprising an EDFA **15** followed by a fiber span **16** which is used as a basis of a simulation of different transmission conditions. The EDFA 15 is used as a generic amplifier, i.e. the simulation is carried through with different working conditions of the EDFA, irrespective of how these conditions may be realized in a physical optical amplifier. The fiber span 16 consists of a simulated 80 km single mode fiber (SMF). At an output **17** of the EDFA 15, the total optical power of the transmitted optical signal is measured, and at an output **18** of the optical fiber span 16, the optical power per channel of the transmitted signal is measured. The results of these measurements are represented for three different working conditions of the EDFA in **Fig.s 3, 4,** and **5.**

In Fig. 3, the results of the simulation for the EDFA 15 working in a constant gain mode with constant flat gain are shown. The optical power per channel at the output of the fiber span 16 is represented in three graphs corresponding to three different loading conditions, each of which is represented by a different symbol.

For the first graph (each channel being represented by the symbol ◆, EDFA output power 20 dBm), all 63 channels are activated and distributed from 1529-1561 nm, i.e. over the whole range of the C-band. For the second graph (▲), only 31 channels located at the beginning of the C-band (1529-1545 nm) are activated and for the third graph (■) only 31 channels located at the end of the C-band (1545-1561 nm) are activated (EDFA output power in both cases: 17 dBm). It can be seen from the three graphs in Fig. 3 that a constant gain (i.e. flat) over the amplified frequency range is obtained for neither of the three working conditions.

In Fig. 4, the results of the simulation for the EDFA 15 working in a constant gain mode with constant tilted gain are shown. The EDFA 15 has a total output power of 20 dBm for all 63 channels distributed over the whole C-band (1529-1561 nm, represented by ◆). With only 31 channels (represented by ■) located at the beginning of the C-band (1529-1545 nm), 31 channels (represented by A) located at the end of the C-band (1545-1561 nm), and 31 channels (represented by •) distributed over the whole C-band (1529-1561 nm), the EDFA has an output power of 17 dBm.

With 16 channels (represented by □) located at the beginning of the C-band (1529-1537 nm), for 16 channels (represented by Δ) located at the end of the C-band (1545-1561 nm), and for 16 channels (represented by o) distributed over the whole C-band (1529-1561 nm), the EDFA has an output power of 14 dBm.

The gain tilt (1.6 dB over the whole bandwidth 1529-1561 nm) has been chosen to compensate for the Raman tilt in full load configuration (first graph (◆)): The gain tilt compensates also for the non-flatness of the loss of the fiber over the C-band. However, the constant tilt of the full load configuration is not maintained when the number of channels decreases.

Fig. 5 shows the per-channel optical power at the output 18 of the optical fiber span 16 with the EDFA 15 working in a constant gain mode having variable tilted gain for the same loading configurations as shown in Fig. 4, the gain tilt being adjusted in dependence on the number of channels. Accordingly, the gain tilt over the amplified wavelength band is chosen to be 1.6 dB for all 63 channels, 1.0 dB for 31 channels, and 0.7 dB for 16 channels. It is obvious from Fig. 5 that by using a variable gain tilt adjusted to the loading configurations, an approximately flat gain over the amplified wavelength band can be achieved for any given loading configuration. The variation of output power is only linked with the variation of fiber loss (loss depending of the signal wavelength). One particularly advantageous implementation of the EDFA 15 working in constant gain mode with variable tilted gain can be realized using the optical amplifier 4 shown in Fig. 1.

In contrast to the situation described in connection with Fig. 5, if no variable tilt is used (as in Fig. 4), a change of the number of channels will lead to a large variation of output power per channel (up to 1 dB) which will cumulate with the number of fiber spans (20 or even more). This will result in an extremely large penalty for a WDM fiber optical system.

## Claims

1. Fiber optical system (1) for transmitting an optical signal, comprising
an optical fiber line (2) with a plurality of optical fiber spans (3) interconnected by a plurality of optical amplifiers (4),
**characterized in that**
each optical amplifier (4) comprises:
at least one variable optical attenuator (5) generating a gain tilt of the amplification of the optical signal,
a Raman tilt determining device (6) for determining a Raman tilt induced in the fiber span (3) following the optical amplifier (4), and
a dynamic controller (7) connected to the variable optical attenuator (5) and to the Raman tilt determining device (6) adjusting the gain tilt such that the Raman tilt is compensated for.

2. Fiber optical system according to claim 1, **characterized in that** the Raman tilt determining device (6) comprises an output power measuring device (8) for measuring the output power of the optical amplifier (4) and a gain coefficient determining device (9) for determining a Raman gain coefficient of the optical fiber span (3).

3. Fiber optical system according to claim 1, **characterized in that** each of the optical amplifiers (4) comprises an input power measuring device (14) connected to the dynamical controller (7) for measuring an input power of the optical amplifier (4).

4. Fiber optical system according to claim 3, **characterized in that** each of the optical amplifiers (4) is driven in a constant gain mode.

5. Fiber optical system according to claim 1, **characterized in that** the optical amplifier (4) comprises a first and a second amplification stage (11, 12) and that at least one variable optical attenuator (5) is disposed in between the first and second amplification stage (11, 12) and/or within the first amplification stage (11).

6. Fiber optical system according to claim 5, **characterized in that** a dispersion compensating fiber (13) is arranged in between the first and second amplification stage (11, 12) and that the gain tilt is adjusted such that an additional Raman tilt induced in the dispersion compensating fiber (13) is compensated for.

7. Method for transmitting an optical signal through a fiber optical system according to claim 1, **characterized by** the following steps:
for each of the optical amplifiers (4), determining the Raman tilt induced in the fiber span (3) following the optical amplifier (4) and adjusting the gain tilt of the amplifier (4) such that the Raman tilt is compensated for.

8. Method according to claim 7, **characterized in that** the Raman tilt is determined by measuring the output power of the optical amplifier (4), and determining the Raman gain coefficient of the fiber span (3).

9. Method according to claim 7, **characterized in that** an input power and an output power of the optical amplifier (4) is measured, and the optical amplifier (4) is driven in a constant gain mode.

10. Method according to claim 7, **characterized in that** the number of channels of the optical signal is varied by reconfigurable add/drop multiplexing.

## Amended claims

### Amended claims in accordance with Rule 86(2) EPC.

**1.** Fiber optical system (1) for transmitting an optical signal, comprising
an optical fiber line (2) with a plurality of optical fiber spans (3) interconnected by a plurality of optical amplifiers (4), wherein
each optical amplifier (4) comprises:
at least one variable optical attenuator (5) generating a gain tilt of the amplification of the optical signal,
a Raman tilt determining device (6) for determining a Raman tilt induced in the fiber span (3) following the optical amplifier (4), and
a dynamic controller (7) connected to the variable optical attenuator (5) and to the Raman tilt determining device (6) adjusting the gain tilt such that the Raman tilt is compensated for,
**characterized in that**
the Raman tilt determining device (6) comprises an output power measuring device (8) for measuring the output power of the optical amplifier (4) and a gain coefficient determining device (9) for determining a Raman gain coefficient of the optical fiber span (3).

**2.** Fiber optical system according to claim 1, **characterized in that** each of the optical amplifiers (4) comprises an input power measuring device (14) connected to the dynamical controller (7) for measuring an input power of the optical amplifier (4).

**3.** Fiber optical system according to claim 2, **characterized in that** each of the optical amplifiers (4) is driven in a constant gain mode.

**4.** Fiber optical system according to claim 1, **characterized in that** the optical amplifier (4) comprises a first and a second amplification stage (11, 12) and that at least one variable optical attenuator (5) is disposed in between the first and second amplification stage (11, 12) and/or within the first amplification stage (11).

**5.** Fiber optical system according to claim 4, **characterized in that** a dispersion compensating fiber (13) is arranged in between the first and second amplification stage (11, 12) and that the gain tilt is adjusted such that an additional Raman tilt induced in the dispersion compensating fiber (13) is compensated for.

**6.** Method for transmitting an optical signal through a fiber optical system according to claim 1, comprising the following steps:
for each of the optical amplifiers (4), determining the Raman tilt induced in the fiber span (3) following the optical amplifier (4) and adjusting the gain tilt of the amplifier (4) such that the Raman tilt is compensated for,
**characterized by**
determining the Raman tilt by measuring the output power of the optical amplifier (4), and determining the Raman gain coefficient of the fiber span (3).

**7.** Method according to claim 6, **characterized in that** an input power and an output power of the optical amplifier (4) is measured, and the optical amplifier (4) is driven in a constant gain mode.

**8.** Method according to claim 6, **characterized in that** the number of channels of the optical signal is varied by reconfigurable add/drop multiplexing.
